# EUROPEAN PATENT APPLICATION

(11) **EP 4 428 384 A1**
(43) Date of publication of application: **11.09.2024**
(21) Application number: 24159894.5
(22) Date of filing: 27.02.2024
(51) Int. Cl.: F16D 7/02, B66D 1/16, B66D 3/20, F16D 43/21, F16D 23/12

(54) **CAPSTAN WITH INTEGRATED TORQUE LIMITING OVERLOAD CLUTCH**

(30) Priority: 08.03.2023 US 202318119089
(71) Applicant: Goodrich Corporation, Charlotte, NC 28217-4578 (US)
(72) Inventor: IJADI-MAGHSOODI, Bejan, San Dimas, CA (US)
(74) Representative: Dehns

(57) **Abstract**

A clutch assembly for a hoist includes a gear train (121), a plurality of friction disks (102) rotationally coupled to the gear train (121), a disk spring (136) configured to apply a biasing force to the plurality of friction disks (102), a shaft (130) rotationally coupled to the plurality of friction disks (102), and an adjustment nut (142) configured to be coupled to the shaft (130) adjacent the disk spring (136).

## Description

### FIELD

The present disclosure relates generally to hoists and, more particularly, to overload clutch assemblies for hoists.

### BACKGROUND

Hoists are devices used to mechanically lift and/or lower loads (e.g., cargo, persons, etc.). Hoists may include a motor-driven cable drum around which a cable winds and/or unwinds. The hoist applies a pulling force to the load through the cable in order to control and/or move the load from one physical location to another physical location. Hoists are used in many environments, including aircraft, automobile, and truck applications, as well as anchor systems, cable cars, cranes, elevators, escalators, mine operations, moving sidewalks, rope tows, ski lifts, tethers, etc. A load exceeding a load rating for the hoist can put the aircraft, the crew, the hoist, and/or the load at risk.

### SUMMARY

A clutch assembly for a hoist is disclosed herein. In accordance with various embodiments, the clutch assembly includes a gear train, a plurality of friction disks rotationally coupled to the gear train, a disk spring configured to apply a biasing force to the plurality of friction disks, a shaft rotationally coupled to the plurality of friction disks, and an adjustment nut configured to be coupled to the shaft adjacent the disk spring.

In various embodiments, the clutch assembly further includes a pressure plate wherein the pressure plate is configured to apply the biasing force from the adjustment nut to the disk spring.

In various embodiments, the adjustment nut, the disk spring, and the pressure plate are configured to axially compress the plurality of friction disks.

In various embodiments, the clutch assembly further includes a capstan drum configured to transfer torque from the plurality of friction disks to a cable.

In various embodiments, the clutch assembly further includes a ball ramp assembly rotationally coupled to the capstan drum.

In various embodiments, the adjustment nut is configured to set a slip threshold.

In various embodiments, the adjustment nut rotates relative to the shaft, moving axially along the shaft and compressing the disk spring and the pressure plate to axially compress the plurality of friction disks.

In various embodiments, compressing the plurality of friction disks increases a torque capacity on the clutch assembly.

A hoist is disclosed. The hoist includes a cable drum, a motor configured to rotationally drive the cable drum, a drive train rotationally coupled to the cable drum, and a clutch assembly rotationally coupled between the drive train and the motor. In accordance with various embodiments, the clutch assembly includes a gear train, a plurality of friction disks rotationally coupled to the gear train, a disk spring configured to apply a biasing force to the plurality of friction disks, a shaft rotationally coupled to the plurality of friction disks, and an adjustment nut configured to be coupled to the shaft adjacent the disk spring.

In various embodiments, the hoist further includes a pressure plate wherein the pressure plate is configured to apply the biasing force from the adjustment nut to the disk spring.

In various embodiments, the adjustment nut, the disk spring, and the pressure plate are configured to axially compress the plurality of friction disks.

In various embodiments, the hoist further includes a capstan drum configured to transfer torque from the plurality of friction disks to a cable.

In various embodiments, the hoist further includes a ball ramp assembly rotationally coupled to the capstan drum.

In various embodiments, the adjustment nut is configured to set a slip threshold.

In various embodiments, the adjustment nut rotates relative to the shaft, moving axially along the shaft and compressing the disk spring and the pressure plate to axially compress the plurality of friction disks.

In various embodiments, compressing the plurality of friction disks increases a torque capacity on the clutch assembly.

In various embodiments, the hoist further includes a housing located around the clutch assembly such that the clutch assembly is integral to the hoist.

A hoist for an aircraft is disclosed. The hoist includes a cable drum, a motor configured to rotationally drive the cable drum, and a clutch assembly in operable communication with the cable drum and the motor. In accordance with various embodiments, the clutch assembly includes a gear train, a plurality of friction disks rotationally coupled to the gear train, a disk spring configured to apply a biasing force to the plurality of friction disks, a shaft rotationally coupled to the plurality of friction disks, and an adjustment nut configured to be coupled to the shaft adjacent the disk spring.

In various embodiments, the hoist further includes a housing located around the clutch assembly such that the clutch assembly is integral to the hoist.

In various embodiments, the hoist further includes a pressure plate wherein the pressure plate is configured to apply the biasing force from the adjustment nut to the disk spring.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 is schematic block diagram of a cable winding system, in accordance with various embodiments;
FIG. 2A illustrates a cross-sectional view of a capstan assembly of a cable winding system" in accordance with various embodiments; and
FIG. 2B illustrates a cross-sectional view of the capstan assembly of FIG. 3A, in accordance with various embodiments.

### DETAILED DESCRIPTION

This detailed description of exemplary embodiments references the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein described without departing from the scope and spirit hereof. Thus, this detailed description is presented for purposes of illustration only and not of limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to tacked, attached, fixed, coupled, connected or the like may include permanent, removable, temporary, partial, full and/or any other possible attachment option. Additionally, any reference to without contact (or similar phrases) may also include reduced contact or minimal contact. Cross hatching and surface lines may be used throughout the figures to denote different parts but not necessarily to denote the same or different materials.

An overload clutch for a hoist is disclosed herein. The overload clutch may be configured to prevent the aircraft or hoist from experiencing extreme loading conditions. In accordance with various embodiments, the capstan includes an integrated overload clutch with a torque limiting mechanism.

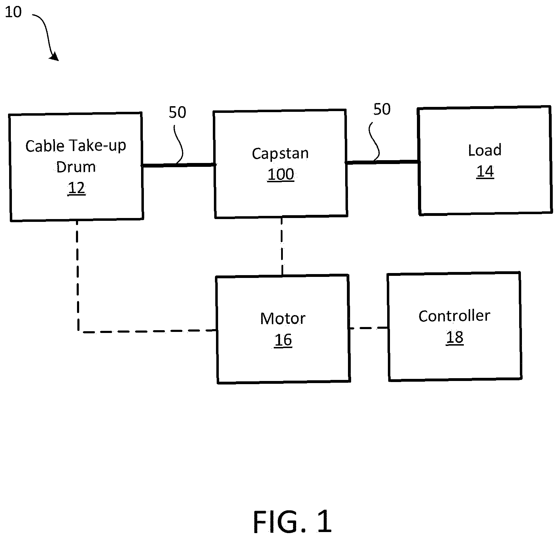

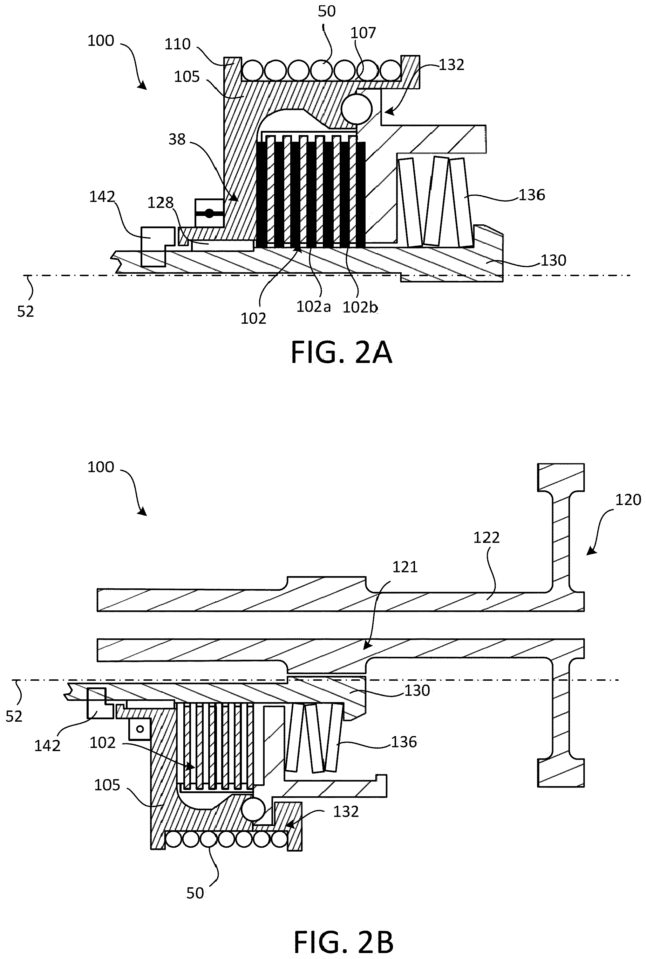

Disclosed herein, according to various embodiments and with reference to FIG. 1, is cable system 10. The cable system 10, which may also be referred to herein as a cable winding system, a hoist system, and/or a winch system, generally includes components for managing a cable 50 (e.g., chain, cord, fiber, rope, and/or other types of extendible, flexible, and/or retractable line). The cable system 10 may include a cable take-up drum 12 and a cable tensioning capstan assembly 100. In various embodiments, and as described in greater detail below with reference to FIGS. 2A and 2B, the cable tensioning capstan assembly 100 is configured to address at least some of the aforementioned shortcomings and/or challenges of conventional cable systems. For example, the system 10 and the disclosed cable tensioning capstan assembly 100 may customization of a torque threshold.

The cable system 10 may be utilized for retracting and/or cable-reeling applications, and a load 14 may be attached at one of the cable 50. In various embodiments, also as described in greater detail below, the cable system 10 may include a motor 16 (e.g., may be a motor-driven system) and/or a controller 18. The motor 16 and/or controller 18 may be coupled in electric control communication with one or both of the cable take-up drum 12 and the cable tensioning capstan assembly 100. For example, the cable 50 may be wound onto and/or off the take-up drum 12 by action of the motor 16. The system 10 may also include a drive train or drive assembly that drives rotation of the drum(s) in connection with hoisting, winching, and/or other cable-reeling applications.

Referring generally, the system 10 may be a hoist system configured to mechanically lift and/or lower loads 14 oftentimes by a motor-driven drum or lift-wheel around which a cable 50 winds and/or unwinds, in various embodiments. In various embodiments, hoists are operated electrically, hydraulically, manually, and/or pneumatically. Still referring generally, hoists apply a pulling force to the load 14 through the cable 50 in order to control and/or move the load 14 from one physical location to another physical location. In various embodiments, hoist assemblies have a lifting harness, hook, hoop, loop and/or other suitable attachment end (collectively referred to herein generally as a hook) at a distal end of the cable 50, which can be affixed and/or secured to the load 14. In various embodiments, the cable take-up drum 12 at the cable end is the fixed end, and the hook end of the cable 50 is the opposing free end. In various embodiments, the load 14 is referred to as cargo, a payload, target, etc. In various embodiments, hoists couple the cable 50 to the load 14 using the hook. In various embodiments, an effective radius of the take-up drum 12 or lift wheel increases as the cable 50 is pulled in, and it decreases as the cable 50 is let out, due to the physically changing, radially successive layers of cable 50 laid thereon.

The cable system 10 may be utilized in many environments, such as air rescues, automobile/car/truck applications, anchor systems, cable cars, cranes, elevators, escalators, mine operations, moving sidewalks, rope tows, ski lifts, tethers, etc. In various embodiments, the cable system 10 may be mounted or otherwise implemented with an aircraft, such as a helicopter. Referring generally, a rescue hoist can be used to pull a target towards and/or into a rescue aircraft, such as a rescue helicopter, including by initially lowering a basket, cage, or other device to the target, securing the target, and then pulling back and/or retrieving the target back to the rescue aircraft, in various embodiments.

In various embodiments, and with reference to FIGS. 2A and 2B, the cable tensioning capstan assembly 100 is shown in additional details. The term "cable tensioning capstan assembly" as used herein generally refers to a rotating device that facilitates cable wrapping and/or reeling. The disclosed cable tensioning capstan assembly 100 is not limited to devices having a vertical axis of rotation, but instead may be used for devices having a horizontal axis of rotation (e.g., a windlass). In various embodiments, the cable tensioning capstan assembly 100 is implemented as an intermediate component between a load 14 and a take-up drum 12 that holds the wound cable 50. However, in various embodiments, and depending the length of the cable 50 and other conditions, the cable tensioning capstan assembly 100 may be implemented without a separate take-up drum.

In various embodiments, the cable tensioning capstan assembly 100 includes a capstan drum 105 (e.g., a housing) and at least a first traction flange 110. The capstan drum 105 may be configured to hold one or multiple wraps of cable 50, and the capstan drum 105 may be configured to rotate about an axis 52. Said differently, the capstan drum 105 may have a radially outward surface 107 around which a cable 50 is configured to be wrapped. The first traction flange 110, according to various embodiments, is disposed adjacent one of the axial ends of the capstan drum 105, and is also configured to rotate about the axis 52. For example, the traction flange 110 may advance or retard the torque transfer to the cable 50 relative to the cable 50 wrapped around the capstan drum 105, and this relative advancement or retardation (dependent upon the direction of rotation) of the portion of the cable 50 that is engaged against/wrapped around the axially extending sections of the traction flange 110 may facilitate clean wrapping or unreeling of the cable 50, may prevent cable slip, and/or may otherwise improve the operational efficiency and effectiveness of a winding/reeling procedure.

The cable tensioning capstan assembly 100 may include an input shaft 130, which may be a final stage of gear train or a gear assembly for conveying rotational power from a motor. Generally, the input shaft 130 may be configured to directly drive (via direct engagement or via one or more intermediate idler gears) rotation of the capstan drum 105, via one or more clutch assemblies (e.g., a friction clutch assembly) to selectively drive and/or selectively provide torque transfer to the traction flange 110.

The cable tensioning capstan assembly 100 may include a first (or input) gear system 120. Input gear system 120 is rotationally coupled to motor 16. In accordance with various embodiments, the input gear system 120 comprises a gear train 121. The gear train 121 includes a plurality of gears supported by a carrier and in meshing engagement (i.e., intermeshed). The gear train 121 is rotationally driven by motor 16. Torque generated by rotation of a gear shaft 122 is transferred to the input shaft 130.

The cable tensioning capstan assembly 100 may include a clutch assembly 38. Clutch assembly 38 includes a plurality of friction disks 102 configured to slip at predetermined load levels, such as twice a rated capacity of the cable system 10. For example, plurality of friction disks 102 may include a first set of friction disks 102a and a second set of friction disk 102b interleaved with friction disks 102a. Friction disks 102a are in operable communication with friction disks 102b with torque being transferred between friction disks 102a and friction disks 102b via a friction coupling between friction disks 102a and friction disks 102b. During a slip, the friction coupling between friction disks 102a and friction disks 102b may be overcome such that less or no torque is transferred. For example, during a slip, friction disks 102b may rotate at a faster speed or a greater rotations per minute (rpm), as compared to friction disks 102a. When friction disks 102 of clutch assembly 38 slip, they disconnect motor 16 from cable drum 12, allowing cable drum 12 to rotate independently of motor 16 and un-spool cable 50 in response to the overload condition. In various embodiments, friction disks 102a and 102b may be made from steel and/or comprise a steel disk therebetween.

During non-overtorqued (i.e., non-slip) conditions, friction disks 102a and 102b of clutch assembly 38 act in unison, such as acting as a rigid member and/or translating rotational motion within clutch assembly 38. Friction disks 102a and 102b are configured to slip relative to one another when the load 14 on the cable 50 exceeds a slip threshold (e.g., a torque threshold). For example, in various embodiments, a slip threshold defined by friction disks 102a and 102b may be approximately twice a rated load capacity of the cable system 10. For example, if cable system 10has a rated load capacity of 600 pounds (272 kg), friction disks 102a and 102b are configured to slip if forces exerted on the cable system 10exceed approximately 1,200 pounds (544 kg), with approximately meaning, in this case only, ±10%. As such, friction disks 102a and 102b are configured to intentionally slip in order to allow the cable 50 to unspool from the cable drum 36 during an overload condition, including without damaging the aircraft, cable system 10, load 14, and/or other equipment. As will be described herein, the slip threshold may be adjusted via an adjustment nut 142.

Further, torque may be transferred to clutch gears from the input shaft 130 via a clamping force exerted on opposing axial sides of each of the clutch gears by friction disks 102. The clamping force may be provided by one or more springs that exert an axial force on one or more friction disks 102 to retain the clutch gears co-rotating with the input shaft until a predetermined torque is achieved (e.g., until a desired tension is transferred to the edge cable wrap), at which point clutch gears 102 slip. Such a configuration may prevent excessive tension being transferred to the cable 50. Further, by using a friction engagement between the clutch gears and the input shaft, the threshold at which the clutch gears slip may be tailored to be below the slippage threshold of the cable 50 around the capstan drum 12, thus preventing cable slippage, which could damage the cable 50. That is, instead of allowing the cable 50 to slip, the slippage is moved to the friction disks 102 of the clutch gears. Depending on the use situation and/or the cable properties, the friction disks 102 (e.g., the axial tension properties of the spring) may be customized to limit torque transfer to the cable.

The cable tensioning capstan assembly 100 may further include a bearing 128. The bearing 128 may be, for example, a radial needle bearing, a thrust bearing, etc. The directional specific configuration of the bearing 128 enable a first desired torque/tension to be transferred to the cable 50 that is wrapped around the traction flange 110 when the input shaft 130 is rotating in a first direction (via the first clutch gear) while allowing/enabling a different, second desired torque/tension to be transferred to the edge cable 50 when input shaft 130 is rotating in a second direction (via the second clutch gear). This differential tensioning of the cable 50 based on the direction of rotation of the input shaft 130 is accomplished by sizing the first clutch gear and the second clutch gear differently.

The capstan drum 105 may be coupled to a ball ramp assembly 132. In this regard, torque generated by rotation of friction disks 102is transferred to the ball ramp assembly 132. The torque generated by rotation of input shaft 130 is transferred to friction disks 102. From the friction disks 102, the torque is transferred party to the capstan drum 105 (e.g., via one friction disk) and partly to the ball ramp assembly 132 (e.g., via the remaining friction disks). Accordingly, if the torque threshold exceeds the torque capacity, the friction disks slip and limit the amount of torque that can get to the capstan drum 105.

In various embodiments, clutch assembly 38 includes a disk spring 136, for example, a Belleville spring, configured to apply a biasing force against the friction disks 102. In various embodiments, an adjustment nut 142 is located adjacent disk spring 136. Adjustment nut 142 may be configured to block or prevent translation of disk spring 136. In this regard, adjustment nut 142 and disk spring 136 may be configured to preload (i.e., apply a pressure to) friction disks 102. Stated differently, adjustment nut 142 and disk spring 136 may be configured to axially compress friction disks 102. For instance, the disk spring 136 may be applied against a pressure plate wherein the pressure plate is configured to apply the biasing force from the adjustment nut to the disk spring. The axial compression of friction disk may generate a friction coupling between friction disks 102a and 102b with torque being transferred between friction disks 102a and friction disks 102b via the frictional coupling. In various embodiments, a thrust bearing may be located between the adjustment nut 142 and the capstan drum 105.

The adjustment nut 142 may be mechanically/manually adjusted to set the cable tensioning capstan assembly 100 to a predetermined slip torque value (e.g., the slip threshold). The slip threshold is the preload of an axial force running across to the friction disks 102 and through the disk spring 136. The ball ramp assembly 132 may provide more stability in terms of the breakaway variation (e.g., the torque capacity needed prior to disengagement or slip). In other words, the adjustment nut 142 may be tightened to increase an input (e.g., the axial force) and thus increase an output (e.g., the torque capacity). Accordingly, when the friction disks 102 slip, there is a differential variation between the input and the output and allow the cable 14 to reel out.

The adjustment nut 142 may comprise internal threads such that the adjustment nut 142 is configured to be threaded about the input shaft 130. As the adjustment nut 142 rotates relative to the input shaft 130, the adjustment nut 142 moves axially along the input shaft 130, thus pushing the entire assembly in the same axial direction and compressing, or applying a force on, the disk spring 136. The more the disk spring 136 is compressed, the preload is increased within the system, e.g., in the clutch assembly 38. In other words, the more preload force translates to more force on the friction disks 102 and the torque capacity of the entire clutch is proportional to this force. In operation, when that torque is exceeded, the friction disks 102 slip and allows the cable 50 to reel out.

The adjustment nut 142 may be adjusted to a final setting before its installed. In various embodiments, the adjustment nut 142 may be configured such that the adjustment nut 142 is accessible by a user to adjust as desired.

The torque limiting overload capstan as described herein beneficially protect the cable tensioning capstan assembly 100 such that a torque capacity may be set to limit the excessive load applied to the system before the cable 14 is released, thus reducing the risk the hoist can put on the aircraft, the crew, the hoist, and/or the load. The disclosed cable tensioning capstan assembly 100 prevents cable slippage at the interface of the cable 50 with the capstan drum 105 at an undesired threshold. That is, the cable tensioning capstan assembly 100 may generally include a clutch assembly configured to control the tension of the cable while the cable is being wrapped or let-out from the take-up drum. The clutch assembly may be an adjustable clutch that limits the available torque that can be transferred.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it may be within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A clutch assembly for a hoist, comprising:
a gear train (121);
a plurality of friction disks (102) rotationally coupled to the gear train (121);
a disk spring (136) configured to apply a biasing force to the plurality of friction disks (102);
a shaft (130) rotationally coupled to the plurality of friction disks (102); and
an adjustment nut (142) configured to be coupled to the shaft (130) adjacent the disk spring (136).

2. The clutch assembly of claim 1, further comprising a pressure plate wherein the pressure plate is configured to apply the biasing force from the adjustment nut (142) to the disk spring (136).

3. The clutch assembly of claim 2, wherein the adjustment nut (142), the disk spring (136), and the pressure plate are configured to axially compress the plurality of friction disks (102).

4. The clutch assembly of any preceding claim, further comprising a capstan drum (105) configured to transfer torque from the plurality of friction disks (102) to a cable.

5. The clutch assembly of claim 4, further comprising a ball ramp assembly (132) rotationally coupled to the capstan drum (105).

6. The clutch assembly of claim 3, wherein the adjustment nut (142) is configured to set a slip threshold.

7. The clutch assembly of claim 6, wherein the adjustment nut (142) rotates relative to the shaft (130), moving axially along the shaft (130) and compressing the disk spring (136) and the pressure plate to axially compress the plurality of friction disks (102).

8. The clutch assembly of claim 6, wherein compressing the plurality of friction disks (102) increases a torque capacity on the clutch assembly.

9. A hoist, comprising:
a cable drum (12);
a motor (16) configured to rotationally drive the cable drum;
a drive train rotationally coupled to the cable drum; and
the clutch assembly of any preceding claim rotationally coupled between the drive train and the motor.

10. The hoist of claim 9, further comprising a housing located around the clutch assembly such that the clutch assembly is integral to the hoist.

11. A hoist for an aircraft, comprising:
a cable drum (12);
a motor (16) configured to rotationally drive the cable drum; and
the clutch assembly of any of claims 1-8 in operable communication with the cable drum and the motor.

12. The hoist of claim 11, further comprising a housing located around the clutch assembly such that the clutch assembly is integral to the hoist.
